# EUROPEAN PATENT SPECIFICATION

(11) **EP 1 178 319 B1**
(45) Date of publication and mention of the grant of the patent: **18.05.2005**
(21) Application number: 01202526.8
(22) Date of filing: 02.07.2001
(51) Int. Cl.: G01P 1/02, G01P 3/44

(54) **Speed sensor integrated into a bearing cap**
Geschwindigkeitssensor, integriert in die Abdeckkappe eines Lagers
Capteur tachymétrique integré dans le couvercle d'un palier

(30) Priority: 01.08.2000 US 222350 P; 22.01.2001 US 766747
(43) Date of publication of application: 06.02.2002
(73) Proprietor: Delphi Technologies, Inc., Troy, MI 48007 (US)
(72) Inventor: Foster, David A., Castalia, OH 44824 (US); Faetanini, Steven E., Sandusky, OH 44870 (US)
(74) Representative: Denton, Michael John

(56) References cited:
- EP-A- 0 727 647
- EP-A- 0 783 105
- DE-A- 19 930 139
- US-A- 5 140 261
- US-A- 5 861 744

## Description

### TECHNICAL FIELD

The technical field of this disclosure is speed sensors for wheel bearing packages. In particular, a sensor cap is provided with an active sensor chip and associated elements into an integrated, sealed unit that accurately positions the sensor and protects the sensor from harsh conditions.

### BACKGROUND OF THE INVENTION

Speed sensors are commonly included as an element in wheel bearing packages. Prior art sensors include passive sensors. Passive sensors provide a magnetic field with some type of magnet, generally combined in proximity with a sensing coil into a sensor component. The coil-magnet component is usually mounted fixed relative to the vehicle, since it has signal wires leaving it. A variable reluctance ring, generally a toothed iron ring, is mounted so as to turn at the speed of the wheel, within the magnetic field, thereby creating an electric signal that varies with wheel speed.

Passive sensors use wire coils and pole pieces combined with magnets to sense the moving sensor ring teeth. With regard to production of an integrated assembly, the prior sensors have presented some challenges. In particular, variable reluctance sensors include a large number of delicate parts that must be maintained in a connected state during packing in a housing. The fine wire coils and connections between components are particularly fragile. The coils and connections have been known to break easily during over-molding, as a result of thermal stress, during servicing and for other reasons.

It would be desirable to have a sensor system that would overcome the above disadvantages without involving extra steps and expense.

DE 199 30 139 (=US 6 203 204) shows a speed sensor device in which a magnetic sensor and a pair of terminals are moulded directly into a plastic cap. This arrangement is difficult to produce, since the sensor and the terminals must be accurately located in the mould before moulding takes place, and held in position during moulding.

The present invention seeks to provide a device and method in which both the manufacturing process and the attainment of the required accuracy are simplified.

### SUMMARY OF THE INVENTION

The present invention provides a sensor device as defined in claim 1. The invention also provides a method of making a speed sensor device as defined in claim 9.

The foregoing and other features and advantages of the invention will become further apparent from the following detailed description of the presently preferred embodiments, read in conjunction with the accompanying drawings. The detailed description and drawings are merely illustrative of the invention rather than limiting, the scope of the invention being defined by the appended claims.

### BRIEF DESCRIPTION OF THE DRAWINGS

**FIG. 1** shows an embodiment of the sensor package located adjacent a wheel bearing.
**FIG. 2** shows an embodiment of the sensor components.
**FIG. 3** shows an embodiment of the sensor cap.

### DESCRIPTION OF THE PREFERRED EMBODIMENT

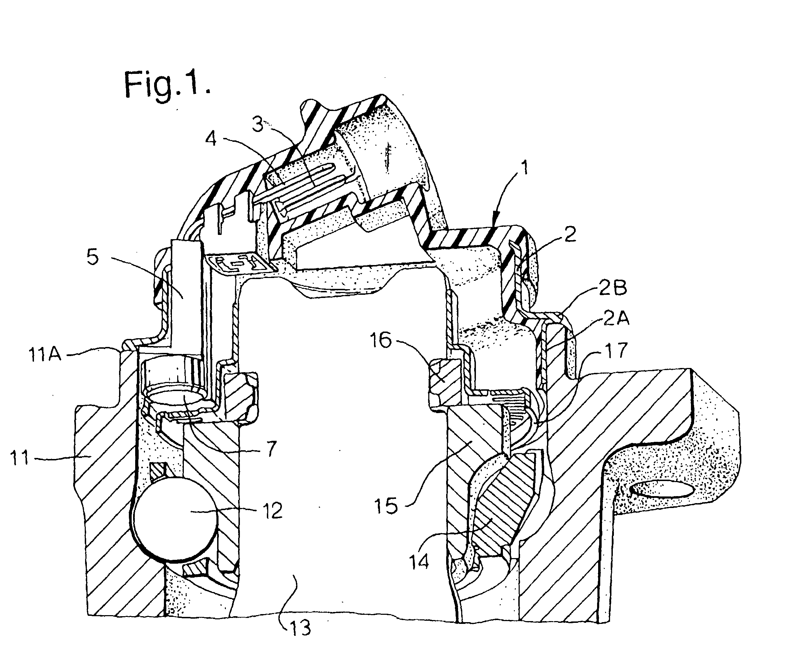

Referring to **FIG. 1,** a section view of the sensor package located on a wheel bearing is shown. The sensor package can include a thermoplastic body **1** including a metal mounting ring **2.** A pair of connector terminals **3, 4** may be located in an upper portion of the body 1. A plastic insert **5** can receive the terminals **3, 4** in an upper portion. Opposite the upper end of the plastic insert **5,** the active sensor package or element 7, can be received in a lower end of the plastic insert. The active sensor is a sensor that includes a solid-state chip for sensing changes in a magnetic field. Examples of active sensors include Hall effect sensors, MR sensors and the like.

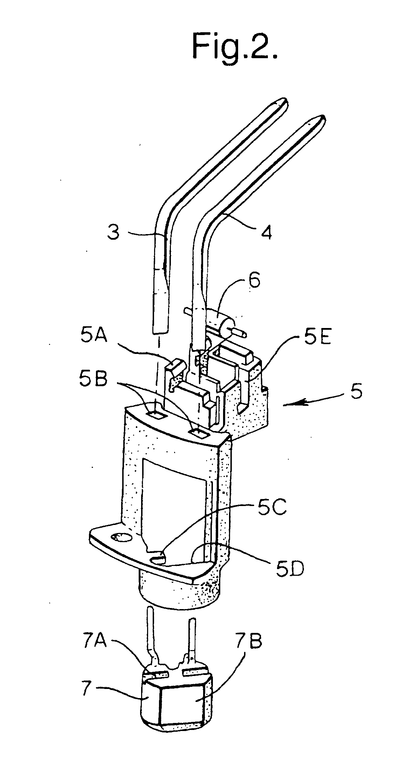

An optional capacitor (shown in **FIG. 2)** can be located in a slot in the upper end of the plastic insert **5** adjacent the terminals **3, 4.** The capacitor is bridged across the terminals **3, 4.**

The bearing assembly can include a hub **11**, multiple rolling elements **12**, a spindle **13**, two separators **14**, an inner ring **15**, two C-keepers **16**, and a sensor ring **17**. The sensor ring **17** may be a metallic piece with teeth or a flat surface with areas effecting magnetic field concentration variances or the like, as long as it is capable of producing magnetic field variances detectable by the sensor **7**. The sensor package can be mated to the bearing hub **11** by a press fit with the pilot diameter **2A** of the metal ring **2**. This can be a steel interface for leak prevention and for maximum retention of the sensor package to the bearing. The flange **2B** of the metal mounting ring **2** can be pressed against the bearing hub **11** end face **11A** and acts as a positive stop of the location of the sensor assembly. This insures the correct relative position of the active sensor element **7** to the sensor ring **17**. In this manner, the air gap or sensor gap is carefully maintained between the sensor element **7** and the sensor ring **17**. The gap or operating distance between the tone wheel or sensor ring **17** and the sensor element is usually less than 1.27mm (0.050 inches). Since the active sensor **7** is position-sensitive, this resulting gap is an important aspect of the invention.

Referring to **FIG. 2**, the components that are assembled into the plastic insert **5** are shown. These components include the connection terminals **3**, **4**, the capacitor **6** and the active sensor element package **7**. The plastic insert **5** contains unique features to locate the sensor element package and the two terminals. Two features on the plastic insert locate the sensor element package. A small tab **5C** provides a positive stop of the slot **7A** on the top of the sensor element package. Additionally, the flat **7B** on the sensor element package aligns with the flat **5D** on the plastic insert. This orientation feature optimizes the sensor performance for a given sensor ring geometry. A pocket or slot **5E** in the plastic insert provides the locating feature for the capacitor **6**. The terminals **3, 4** are retained in the plastic inset by the snap feature **5A**.

The components of the insert assembly are assembled as follows. First, the capacitor **6** is placed into the pocket **5E** of the plastic insert **5**. Next, the two terminals **3, 4** are inserted through the holes **5B** in the plastic insert **5** and snapped into the snap retention features **5A** of the plastic insert. The sensor package **7** is then inserted into the bottom of the plastic insert **5** and oriented according to features **5C, 5D**. The leads of the sensor element package and the capacitor can be resistance welded to the terminals or attached and electrically connected by any appropriate known method. The advantage of the present arrangement includes the relatively robust connection between the terminals **3, 4** and sensor **7**, which is not possible with the fine wire coils of the prior art. Additional holes in the plastic insert can be used to locate the insert assembly in the mold.

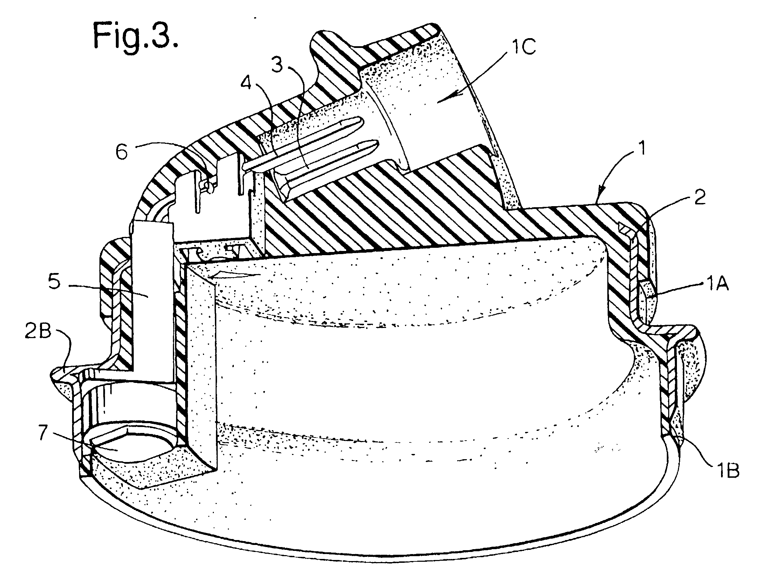

**FIG. 3** illustrates a sectional view of the finished sensor cap. The thermoplastic sensor body **1** encapsulates the sensor components and forms the connector cavity **1C**. The plastic insert **5** contains the connector terminals **3, 4,** the active sensor element package **7,** and the capacitor **6.** The assembled insert and the metal mounting ring **2** are located in the lower portion of the mold such that the active sensor **7** is located at a predetermined location relative to the flange **2B** adjacent the metal ring **2**. This method of locating the sensor precisely locates the sensor **7** with respect to the tone wheel or sensor ring **17** after assembly of the sensor cap body **1** to the wheel bearing assembly.

During the molding process, the lower portion of the mold has pins that locate in the holes of the insert assembly to keep the insert assembly stationary. The lower portion of the mold also has a feature that locates the flange **2B** of the metal ring **2**. The lower portion of the mold also provides the shape for the interior of the sensor cap. The right and left sides of the mold provide the shape of the outside of the sensor cap. Another mold insert provides the shape of the connector cavity **1C**. The two mold halves are closed and the thermoplastic for body **1** is injected into the mold. A finished part is removed from the mold when the molding process is complete. The thermoplastic material is cut off on the outside of the metal ring portion **1A** and on the bottom face of the metal ring portion **1B**. The thermoplastic material seals the sensor cavity from the outside environment. The length of the potential leak path of contaminants from the outside of the sensor cap into the interior of the sensor/bearing cavity is maximized by the length of the thermoplastic material **1** that surrounds the metal mounting ring **2**.

## Claims

1. A speed sensor device comprising:
a sensor (7);
a pair of terminals (3.4) electrically connected with output leads of the sensor (7);
a cap (1) integrally moulded around the sensor (7) and the terminals (3,4)and providing a locating flange (2B) by means of which the speed sensor device can be located on a hub (11) with the sensor (7) a predetermined distance from a tone wheel (17) secured to a spindle (13) rotatable relative to the hub (11);
**characterised by** an insert (5) formed with first locating means (5C,5D) for locating the sensor (7) in a predetermined position in the insert (5) and second locating means (5A,5B) for locating the terminals (3,4) in the insert (5), the insert (5) being located together with the sensor (7) and the terminals (3,4) integrally over-moulded within the cap (1).

2. A device according to claim 1, in which the first locating means comprises a generally cylindrical portion of the insert with a locating tab (5C) formed thereon and engaging a corresponding groove (7A) in the sensor (7), the tab (5C) and groove (7A) being positioned to maintain the sensor (7) in said predetermined position.

3. A device according to claim 2, in which said generally cylindrical portion has a locating flat side (5D) formed thereon contacting a corresponding flat side (7B) of the sensor (7).

4. A device according to any preceding claim, in which the second locating means comprises a pair of retaining catches (5A) for retaining the terminals (3,4).

5. A device according to any preceding claim, in which the insert (5) comprises further locating means (5E) for locating a capacitor (6) in contact with the terminals (3,4).

6. A device according to claim 5, in which the further locating means comprises a transverse slot (5E) adjacent the terminals (3,4).

7. A device according to any preceding claim, in which the flange (2B) is formed on an annular mounting ring (2) formed in the cap (1).

8. A device according to claim 7, in which the mounting ring (2) and the flange (2) are provided by a metal element which is exposed on the surface of the cap (1).

9. A method of making a speed sensor device, including the steps of moulding a cap (1) around a speed sensor (7) and a pair of terminals (3,4), the cap (1) being moulded so as to provide a locating flange (2B) by means of which the speed sensor device can be located on a hub (11) with the sensor (7) a predetermined distance from a tone wheel (17) secured to the hub (11);
**characterised in that** the sensor (7) and the terminals (3,4) are first located within respective locating means (5C,5D; 5A,5B) of an insert (5), and the cap (1) is then integrally moulded around the insert (5) and the sensor (7) and terminals (3,4) located therein.

10. A method according to claim 9, in which a capacitor (6) is also positioned in the insert (5) before the moulding of the cap (1) is carried out.

## Patentansprüche

1. Drehzahlsensorvorrichtung mit:
einem Sensor (7);
zwei Klemmen (3, 4), die elektrisch mit den Ausgangsanschlüssen des Sensors (7) verbunden sind;
einer Kappe (1), die einstückig um den Sensor (7) und die Klemmen (3, 4) herum geformt ist und einen Positionierungsflansch (2B) bereitstellt, durch den die Drehzahlsensorvorrichtung auf einer Nabe (11) positioniert werden kann, wobei der Sensor (7) einen vorbestimmten Abstand zu einem Geberrad (17) aufweist, das an einer Spindel (13) befestigt ist, die relativ zu der Nabe (11) rotierbar ist;
**gekennzeichnet durch** einen Einsatz (5), der mit einem ersten Positionierungsmittel (5C, 5D) zum Positionieren des Sensors (7) in eine vorbestimmte Position in den Einsatz (5) und einem zweiten Positionierungsmittel (5A, 5B) zum Positionieren der Klemmen (3, 4) in dem Einsatz (5) gebildet ist, wobei der Einsatz (5) zusammen mit dem Sensor (7) und den Klemmen (3, 4) in der Kappe (1) einstückig umspritzt ist.

2. Vorrichtung nach Anspruch 1, wobei das erste Positionierungsmittel einen im Allgemeinen zylindrischen Abschnitt des Einsatzes umfasst, wobei eine Positionierungsnase (5C) darauf ausgebildet ist und mit einer entsprechenden Rille (7A) in dem Sensor (7) in Eingriff steht, wobei die Nase (5C) und die Rille (7A) positioniert sind, um den Sensor (7) in der vorbestimmten Position zu halten.

3. Vorrichtung nach Anspruch 2, wobei der im Allgemeinen zylindrische Abschnitt eine flache Positionierungsseite (5D) aufweist, die daran ausgebildet ist und eine entsprechende flache Seite (7B) des Sensors (7) berührt.

4. Vorrichtung nach einem der vorhergehenden Ansprüche, wobei das zweite Positionierungsmittel zwei Halterasten (5A) zum Festhalten der Klemmen (3, 4) umfasst.

5. Vorrichtung nach einem der vorhergehenden Ansprüche, wobei der Einsatz (5) des Weiteren ein Positionierungsmittel (5E) zum Positionieren eines Kondensators (6) in Kontakt mit den Klemmen (3, 4) umfasst.

6. Vorrichtung nach Anspruch 5, wobei das weitere Positionierungsmittel einen Querschlitz (5E) benachbart zu den Klemmen (3, 4) umfasst.

7. Vorrichtung nach einem der vorhergehenden Ansprüche, wobei der Flansch (2B) an einem in der Kappe (1) ausgebildeten kreisringförmigen Befestigungsring (2) ausgebildet ist.

8. Vorrichtung nach Anspruch 7, wobei der Befestigungsring (2) und der Flansch (2) durch ein Metallelement vorgesehen sind, das auf der Oberfläche der Kappe (1) freiliegt.

9. Verfahren zum Anfertigen einer Drehzahlsensorvorrichtung mit den Schritten des Spritzens einer Kappe (1) um einen Drehzahlsensor (7) und zwei Klemmen (3, 4) herum, wobei die Kappe (1) gespritzt wird, um einen Positionierungsflansch (2B) bereitzustellen, durch den die Drehzahlsensorvorrichtung auf einer Nabe (11) positioniert werden kann, wobei der Sensor (7) mit einem vorbestimmten Abstand von dem Geberrad (17) an der Nabe (11) befestigt wird;
**dadurch gekennzeichnet, dass**
der Sensor (7) und die Klemmen (3, 4) zuerst in dem jeweiligen Positionierungsmittel (5C, 5D; 5A, 5B) eines Einsatzes (5) positioniert werden, und die Kappe (1) dann um den Einsatz (5) und die darin positionierten Sensor (7) und Klemmen (3, 4) herum einstückig geformt wird.

10. Verfahren nach Anspruch 9, wobei ein Kondensator (6) ebenfalls in dem Einsatz (5) positioniert wird, bevor das Formen der Kappe (1) durchgeführt wird.

## Revendications

1. Dispositif de détection tachymétrique, comprenant :
un capteur (7) ;
une paire de bornes (3, 4) reliées électriquement à des conducteurs de sortie du capteur (7) ;
un couvercle (1), moulé d'une seule pièce autour du capteur (7) et des bornes (3, 4) et fournissant une bride de positionnement (2B) au moyen de laquelle le dispositif de détection tachymétrique peut être positionné sur un moyeu (11) avec le capteur (7), à une distance prédéterminée par rapport à un émetteur à interruptions périodiques (17) fixé sur une broche (13) susceptible de tourner par rapport au moyeu (11) ;
**caractérisé par** un insert (5) formé avec des premiers moyens de positionnement (5C, 5D) servant à positionner le capteur (7) en une position prédéterminée dans l'insert (5), et des deuxièmes moyens de positionnement (5A, 5B) servant à positionner les bornes (3, 4) dans l'insert (5), l'insert (5) étant positionné conjointement avec le capteur (7) et les bornes (3, 4) surmoulées d'une seule pièce à l'intérieur du couvercle (1).

2. Dispositif selon la revendication 1, dans lequel les premiers moyens de positionnement comprennent une partie globalement cylindrique de l'insert, avec une patte de positionnement (5C) formée sur elle et venant en prise avec une gorge (7A) correspondante, ménagée dans le capteur (7), la patte (5C) et la gorge (7A) étant positionnées afin de maintenir le capteur (7) à ladite position prédéterminée.

3. Dispositif selon la revendication 2, dans lequel ladite partie globalement cylindrique présente une face plate de positionnement (5D), formée sur elle et venant en contact avec une face plate (7B), correspondante, du capteur (7).

4. Dispositif selon l'une quelconque des revendications précédentes, dans lequel les deuxièmes moyens de positionnement comprennent une paire de cliquets de retenue (5A) pour retenir les bornes (3, 4).

5. Dispositif selon l'une quelconque des revendications précédentes, dans lequel l'insert (5) comprend des moyens de positionnement (5E) supplémentaires pour positionner un condensateur (6) en contact avec les bornes (3, 4).

6. Dispositif selon la revendication 5, dans lequel les moyens de positionnement supplémentaires comprennent une fente (5E) transversale, adjacente aux bornes (3, 4).

7. Dispositif selon l'une quelconque des revendications précédentes, dans lequel la bride (2B) est formée sur un anneau de montage (2) annulaire, formé dans le couvercle (1).

8. Dispositif selon la revendication 7, dans lequel l'anneau de montage (2) et la bride (2) sont fournis par un élément métallique, exposé sur la surface du couvercle (1).

9. Un procédé de fabrication d'un dispositif de détection tachymétrique, comprenant les étapes de moulage d'un couvercle (1) autour d'un capteur tachymétrique (7) et d'une paire de bornes (3, 4), le couvercle (1) étant moulé de manière à fournir une bride de positionnement (2B) au moyen de laquelle le dispositif de détection tachymétrique peut être positionné sur un moyeu (11) avec le capteur (7), à une distance prédéterminée par rapport à un émetteur à interruptions périodiques (17) fixé sur le moyeu (11) ;
**caractérisé en ce que** le capteur (7) et les bornes (3, 4) sont d'abord positionnés dans des moyens de positionnement (5C, 5D ; 5A, 5B) respectifs d'un insert (5), et le couvercle (1) est ensuite moulé d'une seule pièce autour de l'insert (5) et du capteur (7) et des bornes (3, 4) placées en son sein.

10. Un procédé selon la revendication 9, dans lequel un condensateur (6) est également positionné dans l'insert (5) avant que ne soit effectué le moulage du couvercle (1).
